# EUROPÄISCHE PATENTSCHRIFT

(11) **EP 0 384 486 B1**
(45) Veröffentlichungstag und Bekanntmachung des Hinweises auf die Patenterteilung: **01.02.1995**
(21) Anmeldenummer: 90103580.8
(22) Anmeldetag: 23.02.1990
(51) Int. Cl.: H02G 3/04

(54) **Kabelkanal**
Cable conduit
Canalisation de câbles

(30) Priorität: 24.02.1989 DE 8902240 U
(43) Veröffentlichungstag der Anmeldung: 29.08.1990
(73) Patentinhaber: NOWA-PLAST GmbH ELEKTROTECHNISCHE FABRIK, D-35799 Merenberg (DE)
(72) Erfinder: Ham, van den P., NL-1077 CS Amsterdam (NL)
(74) Vertreter: Prechtel, Jörg, Dipl.-Phys. Dr.

(56) Entgegenhaltungen:
- EP-A- 0 149 377
- DE-A- 3 340 520

## Beschreibung

Die Erfindung betrifft einen Kabelkanal mit Hohlkammerprofilboden mit Außenwand und Innenwand und mit Stegen zwischen den Wänden.

Kabelkanäle dienen zur sicheren und übersichtlichen Führung von Leitungen.

Ein aus der DE-OS 33 40 520 bekannter Kabelkanal hat einen Hohlkammerprofilboden, dessen Innenwand und Außenwand durch in Längsrichtung des Kabelkanals verlaufende, auf Innen- und Außenwand senkrecht stehende Stege miteinander verbunden sind, so daß zwischen den Wänden und den Stegen Hohlkammern mit rechteckigem Querschnitt liegen. In der DE-OS 33 40 520 wird auf herstellungstechnische Vorteile hingewiesen, die sich bei Kabelkanälen mit Hohlkammerprofilboden mit dünnen Wänden und Stegen gegenüber vollwandigen Kabelkanälen vergleichbarer mechanischer Stabilität ergeben.

Über die Art der Befestigung des Kabelkanals an einer Wand gibt die DE-OS 33 40 520 keine Auskunft.

Die Befestigung eines Kabelkanals an einer Wand muß mechanisch stabil sein, so daß weder eine Lockerung noch eine Ablösung des Kanals von der Wand mit der Gefahr von Kabelverletzungen auftreten kann. Darüberhinaus ist es zur Vermeidung von Kabelverletzungen unbedingt erforderlich, scharfkantige Befestigungsteile, wie z.B. Schrauben mit in den Kanal hinein vorstehenden, nicht abgedeckten Schraubköpfen, von den Leitungen im Kabelkanal fernzuhalten.

Es sind Kabelkanäle bekannt, die, zur Erfüllung der Forderungen nach mechanischer Stabilität der Befestigung und Sicherheit gegen Kabelverletzungen, auf gesonderte, in die Wand geschraubte Befestigungsplatten mit Hutprofil aufgeschient und arretiert werden. Dazu sind diese bekannten Kabelkanäle mit einer Führungsschiene versehen, die auf das Hutprofil der Befestigungsplatten aufgeschoben werden kann.

Der Kanalboden und die von dem Kanalboden abstehenden Führungsschienen sind bei diesen bekannten Kabelkanälen vollwandig und im wesentlichen verformungssteif ausgebildet, um einen stabilen Eingriff des Schienenprofils in das Hutprofil der Befestigungsplatte sicherzustellen. Die herstellungstechnischen Vorteile der Ausbildung eines Kabelkanals mit Hohlkammerprofilboden liegen bei den bekannten Kabelkanälen mit Führungsschienen nicht vor.

Ein Nachteil der Montage des Kabelkanals mit Befestigungsplatten liegt ferner darin, daß die Befestigung umständlich und zweitaufwendig ist. So ist es erforderlich, die Führungsplatten zunächst in einer genau ausgemessenen Flucht anzuordnen, bevor der Kabelkanal auf die Führungsplatten aufgeschoben werden kann. Sind die Führungsplatten nicht sorgfältig in einer Flucht angeordnet, dann wird es schwierig oder gar unmöglich, den Kabelkanal auf alle Platten aufzuschienen. Um sicherzugehen, daß alle Führungsplatten in Eingriff mit der Führungsschiene des Kabelkanals stehen, ist nach Anbringen des Kabelkanals auf die Führungsplatten jeder einzelne Befestigungspunkt zu überprüfen.

Die vorliegende Erfindung hat die Aufgabe, einen Kabelkanal mit Hohlkammerprofil anzugeben, der schnell, einfach und mechanisch stabil an einer Wand befestigt werden kann und darüberhinaus große Sicherheit gegen Verletzungen der in dem Kabelkanal verlegten Leitungen gewährleistet.

Diese Aufgabe wird durch die kennzeichnenden Merkmale des Hauptanspruchs gelöst.

Der Kabelkanal kann mit Senkkopfschrauben direkt an eine Wand angeschraubt werden. Für die Durchführung der Befestigungsschrauben durch den Hohlkammerprofilboden des Kanals hindurch sind lediglich Bohrungen vorzusehen, welche den Hohlkammerprofilboden im Bereich der Hohlkammer mit im wesentlichen gleichschenklig-trapezförmigem Querschnitt durchsetzen. Die Schraubkopfunterseiten der in die Wand hineingeschraubten Befestigungsschrauben stützen sich dabei gegen die geneigten Stege ab, wodurch selbst bei dünnen Wänden und Stegen des Hohlkammerprofilbodens eine gute Ausreiß- und Abscherfestigkeit im Schraubbereich erzielt wird. Die Schrauben lassen sich so weit in das Hohlkammerprofil hineinführen, daß die Schraubkopfoberseiten unterhalb der Außenseite der Innenwand des Hohlkammerprofilbodens liegen. Dadurch wird eine Verletzung der in dem Kabelkanal verlegten Leitungen durch scharfkantige Schraubteile vermieden.

Das direkte Anschrauben des erfindungsgemäßen Kabelkanals an die Wand ist gegenüber dem gesonderten Anbringen von Führungsplatten an die Wand und Aufschienen des Kabelkanals auf die Führungsplatten, gemäß herkömmlicher Befestigungsmethode, nicht nur wesentlich einfacher, sondern auch präziser durchzuführen, bspw. wenn es darauf ankommt, mehrere Kabelkanäle über über Eck und auf Stoß zu montieren, da der erfindungsgemäße Kabelkanal nicht aufgeschient wird, und somit auch kein Verschiebungsspiel für das Aufschienen erfordert.

Gemäß der Weiterbildung der Erfindung nach Anspruch 2 und 3 mit bereits vorgefertigten Bohrungen wird das Einführen der Schrauben in die Hohlkammer und das Anbringen des Kabelkanals an die Wand zusätzlich erleichtert.

Durch die konischen Ausnehmungen der geneigten Stege, gemäß der Weiterbildung der Erfindung nach einem der Ansprüche 4-6, wird an den Stegen eine große Auflagefläche für die Schraubkopfunterseiten gebildet, was der mechanischen Stabilität der Schraubbefestigung des Kanals zusätzlich zugutekommt. Besonders zweckmäßig ist es, wenn der Konuswinkel der Ausnehmungen im wesentlichen dem Konuswinkel der Schraubköpfe der zur Befestigung verwendeten Senkkopfschrauben entspricht, da dann eine optimale Auflagefläche für die Schraubköpfe vorliegt.

Die Ausführung der konischen Ausnehmungen nach Anspruch 6, deren Konuswinkel größer ist als der Winkel, unter dem die Schenkel des im wesentlichen gleichschenkligen Trapezquerschnitts der Hohlkammer 9 aufeinander zulaufen, bzw. unter dem sich Verlängerungsgeraden der Schenkel schneiden, gewährleistet neben einer großen Schraubkopfauflagefläche eine zusätzliche Materialeinsparung im Bereich der geneigten Stege, wobei an der Stelle stärkster mechanischer Beanspruchung, nämlich in dem an die geneigten Stege angrenzenden Bereich der Außenwand des Hohlkammerprofilbodens, eine größere Stegdicke vorliegt als im Bereich der Innenwand des Hohlkammerprofilbodens.

Eine Anordnung der Durchgangsbohrungen in Breitenmitte des Kabelkanals, also in größtem Abstand von Seitenwänden des Kabelkanals, vereinfacht sowohl das Bohren als auch das Anschrauben des Kabelkanals und ist für die mechanische Stabilität der Schraubbefestigung am günstigsten.

Die Weiterbildung der Erfindung nach Anspruch 8 gewährleistet eine kompakte Ausbildung des Hohlkammerprofilbodens. Der Abstand zwischen Innenseite der Innenwand und Innenseite der Außenwand des Hohlkammerprofilbodens dient dazu, die Schraubköpfe vollständig in die Hohlkammer einzuführen, so daß die Schraubkopfoberseiten keinesfalls in das Kanalbett hinein vorstehen.

Das Ausbilden der Hohlkammerprofilbodenwände und der Stege mit gleichen Dicken zwischen 0,3 mm und 1 mm vereinfacht den Herstellungsprozeß und bedeutet geringen Materialeinsatz bei gleichzeitig hoher mechanischer Stabilität des Kabelkanals und der Schraubbefestigung des Kabelkanals.

Eine sehr einfach herstellbare, mechanisch stabile Verbindung aufeinanderfolgender Kabelkanalabschnitte gewährleistet eine Bodenplatte mit von Randseiten der Bodenplatte abstehenden, in den Hohlkammerprofilboden des jeweiligen Kabelkanals eingesteckten Laschen. Die Bodenplatte erfordert keine gesonderten Befestigungsteile oder Befestigungsvorkehrungen an der Wand. Darüber hinaus bleibt der die Leitungen führende Nutzraum der Kabelkanalabschnitte durch die Steckverbindung von Bodenplatte und Kanalabschnitten vollkommen unberührt. In dem Kabelkanal verlegte Leitungen sind somit auch im Beeich der Verbindung aufeinanderfolgender Kabelkanalabschnitte geschützt, da die Bodenplatte die Leitungen von der Wand fernhält und keine Befestigungsteile der Bodenplatte mit den Leitungen in Kontakt kommen.

Die Weiterbildung der Erfindung nach Anspruch 12 eignet sich insbesondere zur Verbindung von unter einem im wesentlichen rechten Winkel an einer Wand aufeinanderfolgenden Kabelabschnitten oder für T- Abzweigungen bzw. Kreuz-Abzweigungen von Kabelkanalabschnitten an einer Wand.

Die als in Plattenebene von der Bodenplatte abstehende Rechteckzähne ausgebildeten Laschen der Bodenplatte sind einfach herstellbar und ermöglichen eine sichere Steckverbindung.

Eine Winkelbodenplatte gewährleistet bei einfacher Montage einen guten Zusammenhalt von über Eck aufeinanderfolgenden Kabelkanalabschnitten und hält Leitungen im Verbindungsbereich der Kanalabschnitte von der Wand fern.

Eine gegebenenfalls aus Metall gefertigte Bodenplatte wirkt darüberhinaus elektrisch abschirmend.

Nachfolgend wird ein bevorzugtes Ausführungsbeispiel der Erdindung anhand der Zeichnungen beschrieben.

Es zeigen:
- Fig. 1: eine perspektivische Darstellung eines Kabelkanals nach der Erfindung,
- Fig. 2: eine Darstellung des in Fig. 1 mit II-.-II markierten Querschnitts des erfindungsgemäßen Kabelkanals,
- Fig. 3: eine entsprechende Querschnittsdarstellung des erfindungsgemäßen Kabelkanals in der Gebrauchsanordnung an einer Wand,
- Fig. 4: eine Teilschnittdraufsicht zweier unter einem rechten Winkel aufeinanderfolgender, durch eine ebene Bodenplatte miteinander verbundener Kabelkanalabschnitte mit einem Haubenformteil zur Abdeckung des Verbindungsbereiches;
- Fig. 5: eine Seitenansicht der Bodenplatte aus Fig. 4;
- Fig. 6: eine Teilschnittdarstellung zweier über Eck aufeinanderfolgender, durch eine Winkelbodenplatte miteinander verbundener Kabelkanalabschnitte mit einem Haubenformteil zur Abdeckung des Verbindungsbereiches und
- Fig. 7: eine Seitenansicht der Winkelbodenplatte aus Fig. 6.

Der in den Figuren dargestellte Kabelkanal ist bezüglich seiner Breitenmitte symmetrisch aufgebaut und umfaßt einen Hohlkammerprofilboden 1 mit Innenwand 2, Außenwand 3 und in Längsrichtung des Kabelkanals verlaufenden Stegen 4, 5 zwischen Innen- und Außenwand 2, 3, ferner Seitenwände 6 und einen Deckel 7.

Innenwand 2 und Außenwand 3 des Hohlkammerprofilbodens 1 verlaufen parallel zueinander und sind durch zwei senkrecht zu den Wänden 2, 3 verlaufende äußere Stege 4 und durch zwei geneigt zu den Wänden 2, 3 verlaufende innere Stege 5 voneinander beabstandet. Die Stege 4, 5 und die Seitenwände 6 bilden mit den Wänden des Hohlkammerprofilbodens 1 Hohlkammern 8 mit rechteckigen und trapezförmigen Querschnitten. Die geneigten Stege 5 formen mit der Innenwand 2 und der Außenwand 3 eine Hohlkammer 9 mit dem Querschnitt eines im wesentlichen gleichschenkligen Trapezes, dessen kürzere Grundlinie von der Außenwand 3 begrenzt wird. Die Symmetrieebene des gleichschenklig-trapezförmigen Hohlkammerquerschnitts deckt sich mit der Symmetrieebene des Kabelkanals in Breitenmitte des Kabelkanals.

Die Seitenwände 6 sind zusammen mit dem Hohlkammerprofilboden 1 zu einem Stück geformt. Abgesehen von Einzelheiten ihres Profils, verlaufen die Seitenwände 6 im wesentlichen parallel zueinander und senkrecht zu den Wänden 2, 3 des Hohlkammerprofilbodens 1 in Längsrichtung des Kabelkanals. Ausgehend von der Außenwand 3 erstrecken sich die Seitenwände 6 beiderseits des Hohlkammerprofilbodens 1 über die Innenwand 2 des Hohlkammerprofilbodens 1 hinaus und bilden zusammen mit der Innenwand 2 das Bett 10 des Kabelkanals. Besonderheiten des Profils der Seitenwände 6 sind in der Reihenfolge ausgehend von dem Hohlkammerprofilboden 1:
a) eine etwa in halber Höhe des Kabelkanals parallel zum Hohlkammerprofilboden 1 in das Kanalbett 10 sich hinein erstreckende Nase 11 zur mechanischen Stabilisierung,
b) eine, auf den Hohlkammerprofilboden bezogen, unter einem Winkel von ca. 45° zum Kanalinnern gerichtete Biegung 12, die an den von dem Hohlkammerprofilboden 1 abstehenden Enden 13 der Seitenwände 6 wieder in einen im wesentlichen senkrecht zu den Wänden 2, 3 des Hohlkammerprofilbodens 1 stehenden Verlauf einmündet, und
c) eine an den Enden 13, auf der dem Kanalbett 10 abgewandten Seite, angeformte Nase 14.

Die Biegung 12 bildet zusammen mit der Nase 14 eine Einlagerungsnut 15 zum Aufschnappen, bzw. Aufschienen des Deckels 7 auf den Kabelkanal. Der Deckel 7 hat an den Innenseiten seiner Seitenwände 16 jeweils eine Nase 17, die in die Einlagerungsnut 15 der Seitenwände 6 des Kabelkanals einschnappbar ist. Durch diese Art der Montage kann der Deckel 7 in Eingriff mit der Einlagerungsnut 15 auf dem Kabelkanal verschoben werden, so daß ein Zugriff auf in dem Kanal verlegte Leitungen 18 möglich ist, ohne den Deckel 7 vollständig vom Kabelkanal zu entfernen.

Mit aufgesetztem Deckel 7 hat der Kabelkanal einen im wesentlichen glatten rechteckigen Außenumfang.

Für die Durchführung von Senkkopfschrauben 22 zur Befestigung des Kabelkanals an der Wand 21 sind längs dem Kabelkanal voneinander beabstandete, im wesentlichen mittig zwischen den geneigten Stegen 5 zentrierte Bohrungen in den Wänden 2, 3 des Hohlkammerprofilbodens 1 vorgesehen. Jeweils eine Bohrung in der Innenwand 2 fluchtet mit einer Bohrung in der Außenwand 3. Der Durchmesser der die Außenwand 3 durchsetzenden Bohrungen entspricht der Länge der kürzeren Grundlinie des im wesentlichen gleichschenkligen Trapezquerschnitts der Hohlkammer 9 und ist kleiner als der Durchmesser der Bohrungen in der Innenwand 2. Der Durchmesser der Bohrung in der Innenwand 2 ist so gewählt, daß die Verbindung zwischen der Innenwand 2 und den geneigten Stegen 5 nicht unterbrochen wird. Die geneigten Stege 5 sind jeweils zwischen den miteinander fluchtenden Bohrungen mit konischen Ausnehmungen 20 versehen, die in die Bohrungen in der Innenwand 2 und der Außenwand 3 übergehen.

Der Konuswinkel der Ausnehmungen entspricht im wesentlichen dem Konuswinkel der Schraubköpfe der zur Befestigung verwendeten Senkkopfschrauben 22 und ist größer als der Winkel, unter dem die Schenkel des im wesentlichen gleichschenkligen Trapezquerschnitts der Hohlkammer 9 aufeinander zulaufen, bzw. unter dem sich Verlängerungsgeraden der Schenkel schneiden.
Die konischen Ausnehmungen 20 in den geneigten Stegen 5 bilden maximale Auflageflächen für die Schraubkopfunterseiten 23 der Senkkopfbefestigungsschrauben 22. Die in die Bohrungen eingeführten und in die Wand 21 hineingeschraubten Schrauben 22 stützen sich mit ihren Senkkopfunterseiten 23 gegen die Auflageflächen der geneigten Stege 5 ab.

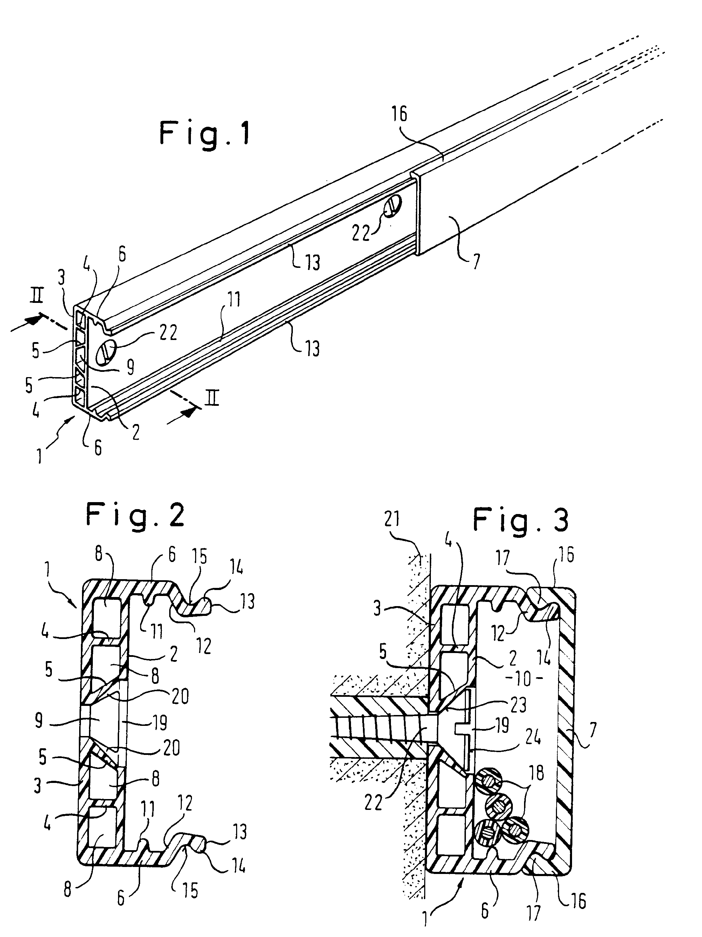

Die vorstehend beschriebene und in Figur 3 dargestellte Schraubbefestigung gewährleistet besonders hohe Ausreiß- und Abscherfestigkeit des Kabelkanals im Schraubbereich.

Zur Vermeidung von Kabelverletzungen ist die Schraube 22 so weit in die Bohrung 19 eingeführt, daß die Schraubkopfoberseite 24 unterhalb der Oberseite der Innenwand 2 des Hohlkammerprofilbodens 1 liegt. Es erstrecken sich somit keine scharfkantigen Schraubteile in das Kanalbett hinein, die ein Aufscheuern oder Aufschneiden von Kabelisolierungen verursachen könnten.

Der in den Figuren dargestellte Kabelkanal hat eine Gesamtbreite von ca. 25 mm und eine Gesamthöhe mit aufgesetztem Deckel von ca. 12 mm. Die Dicke der Seitenwände 6 und der Deckelwände liegt im wesentlichen bei 1,2 mm. Die Gesamtdicke des Hohlkammerprofilbodens 1 beträgt ca. 4 mm. Innenwand 2, Außenwand 3 und Stege 4, 5 des Hohlkammerprofilbodens sind im Mittel etwa 0,5 mm dick. Der Abstand der äußeren Stege 4 von der Innenseite der jeweils benachbarten Seitenwände 6 beträgt ca. 4 mm. Die von der Außenwand 3 des Hohlkammerprofilbodens 1 begrenzte kürzere Grundlinie des im wesentlichen gleichschenkligtrapezförmigen Hohlkammerquerschnitts 9 in Breitenmitte des Hohlkammerprofilbodens 1 ist ca. 2 mm lang, und die längere Grundlinie ist ca. 6 mm lang. Der Abstand der Bohrungen voneinander beträgt ca. 250 mm.

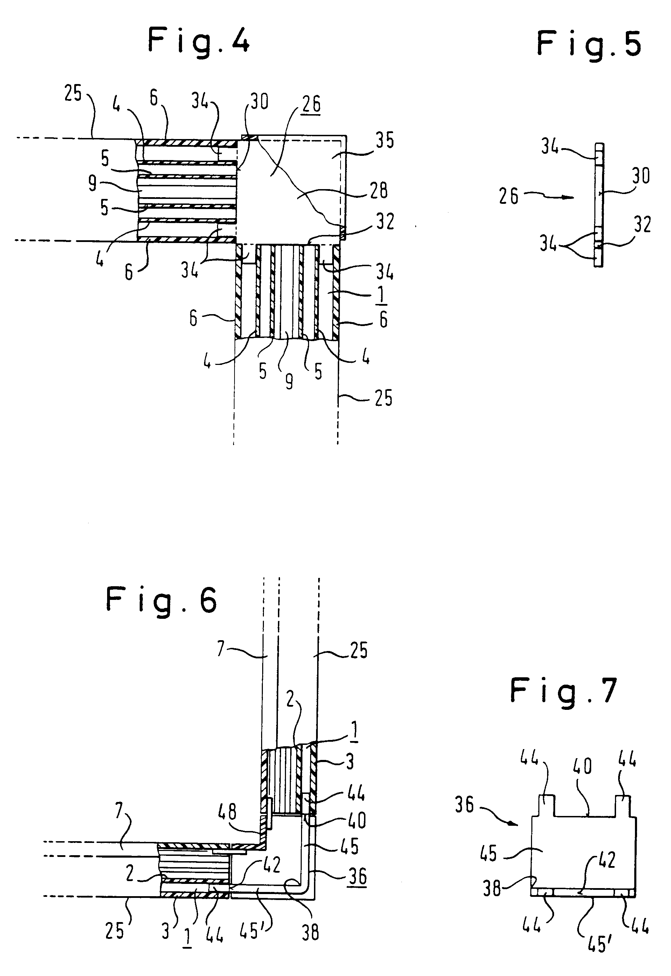

In Fig. 4 ist die Verbindung zweier unter einem im wesentlichen rechten Winkel aufeinanderfolgender Kabelkanalabschnitte 25 durch eine ebene Bodenplatte 26 gezeigt. Die Bodenplatte 26 hat die Form einer quadratischen Platte mit jeweils zwei von zwei aneinander angrenzenden Randseiten 30,32 abstehenden Laschen 34, welche im wesentlichen symmetrisch zur jeweiligen Seitenhalbierenden der der Bodenplatte angeordnet sind. Die Seitenlängen der Bodenplatte 26 stimmen im wesentlichen mit der Breite der an der Bodenplatte 26 angesteckten Kabelkanalabschnitte 25 überein. Die Laschen 34 haben die Form rechteckiger Zähne und stehen in Plattenebene von den Randseiten 30,32 der Bodenplatte 26 ab, so daß die quadratische Platte und die Laschen 34 eine einstückige Scheibe mit im wesentlichen konstanter Dicke bilden. Die Laschen 34 sind in den Hohlkammerprofilboden 1 des jeweiligen Kabelkanalabschnitts 25 eingesteckt und erstrecken sich in die jeweils zwischen den Seitenwänden 6 und den diesen Seitenwänden benachbarten Stegen 4 liegenden Hohlkammern des Kabelkanalabschnitts 25 hinein. Ein aus dem Gesamtkatalog der Anmelderin an sich bekanntes Haubenformteil 35 ist an den Kanalabschnitten 25 angeschnappt und überdeckt den Bereich der Verbindung von Bodenplatte 26 und Kabelkanalabschnitten 25, so daß eine vollständig umhüllte Leitungsführung auch im Verbindungsbereich vorliegt. Sofern der Kabelkanal inclusive Bodenplatte 26 und Haubenformteil 35 metallisch ist, sind Leitungen im Kabelkanal sehr gut elektrisch abgeschirmt.

Die Bodenplatte 26 kann auch an weiteren Randseiten mit Laschen 34 versehen sein, um beispielsweise T- oder Kreuzabzweigungen von Kabelkanalabschnitten 25 zu ermöglichen.

Fig. 7 zeigt zwei durch eine Winkelbodenplatte 36 über-Eck miteinander verbundene Kabelkanalabschnitte 25. Wie auch aus Fig. 6 zu ersehen ist, hat die Winkelbodenplatte 36 die Form einer im wesentlichen rechtwinklig um eine Biegekante 38 parallel zu zwei Randseiten 40,42 gebogenen Reckteckplatte. Von jeder dieser Randseiten 40,42 an den Schenkelenden der Winkelbodenplatte 36 stehen in der Ebene der Schenkel 45,45′ zwei Laschen 44 ab, welche die Form rechteckiger Zähne aufweisen. Die Laschen 44 sind in den Hohlkammerprofilboden 1 des jeweiligen Kabelkanalabschnitts 25 eingesteckt und gewährleisten eine stabile Über- Eck- Verbindung der Kabelkanalabschnitte 25. Die Anordnung der Laschen 44 an den Randseiten 40,42 der Winkelbodenplatte entspricht im wesentlichen der Anordnung der Laschen 34 an den Randseiten 30,32 der ebenen Bodenplatte 26. Die beschriebene und in den Figuren gezeigte Anordnung und Form der Laschen 34,44 ist nicht zwingend, wesentlich ist es, daß die Laschen in den Hohlkammerprofilboden eines jeweiligen Kabelkanalabschnitts einsteckbar sind. Die Winkelbodenplatte 36 ist insbesondere für eine Inneneckverbindung vorgesehen; sie kann auch für eine Außeneckverbindung herangezogen werden. Ein an den Kabelkanalabschnitten angeschnapptes, an sich bekanntes Haubenformteil 48 überdeckt den Bereich der Über-Eck-Verbindung, so daß eine vollständig umhüllte Leitungsführung auch im Verbindungsbereich erzielt wird.

Die Erfindung ist selbstverständlich nicht auf das beschriebene Ausführungsbeispiel mit den genannten Abmessungen eingeschränkt. Ein erfindungsgemäßer Kabelkanal kann z.B. auch mit mehreren im wesentlichen gleichschenklig-trapezförmigen Hohlkammern versehen sein. Dies kann beispielsweise bei breiten Kabelkanälen vorgesehen sein, wenn eine zwei- oder mehrreihige Verschraubung angebracht ist.

Der Kabelkanal, die Bodenplatten und die Haubenformteile sind bevorzugt aus einem PVC-Material hergestellt. Es können jedoch auch andere Materialien, beispielsweise Metalle, verwendet werden, insbesondere wenn eine gute elektrische Abschirmung von Leitungen im Kabelkanal beabsichtigt ist.

## Patentansprüche

1. Kabelkanal mit einem Hohlkammerprofilboden (1) mit Außenwand (3) und Innenwand (2) und mit Stegen (4) zwischen den Wänden (2, 3), **dadurch gekennzeichnet**, daß zwei in Längsrichtung des Kabelkanals nebeneinander verlaufende, gegenüber den Wänden des Hohlkammerprofilbodens (1) geneigte Stege (5) mit der Innenwand (2) und der Außenwand (3) des Hohlkammerprofilbodens (1) eine Hohlkammer (9) mit dem Querschnitt eines im wesentlichen gleichschenkligen Trapezes bilden, dessen kürzere Grundlinie von der Außenwand (3) begrenzt wird.

2. Kabelkanal nach Anspruch 1, **dadurch gekennzeichnet**, daß in Längsrichtung des Kabelkanals voneinander beabstandete, im wesentlichen mittig zwischen den geneigten Stegen (5) zentrierte Bohrungen zur Aufnahme von Senkkopfschrauben in den Wänden (2, 3) vorgesehen sind, wobei jeweils eine Bohrung in der Innenwand (2) mit einer Bohrung in der Außenwand (3) fluchtet und wobei der Durchmesser der Bohrung in der Innenwand (2) den Durchmesser der Bohrung in der Außenwand (3) übersteigt.

3. Kabelkanal nach Anspruch 2, **dadurch gekennzeichnet**, daß der Durchmesser der Bohrung in der Außenwand (3) der Länge der kürzeren Grundlinie des im wesentlichen gleichschenkligen Trapezquerschnitts der Hohlkammer (9) entspricht.

4. Kabelkanal nach Anspruch 2 oder 3, **dadurch gekennzeichnet**, daß die geneigten Stege (5) mit konischen Ausnehmungen (20) versehen sind, die in die Bohrungen der Innenwand (2) und der Außenwand (3) übergehen.

5. Kabelkanal nach Anspruch 4, **dadurch gekennzeichnet**, daß der Konuswinkel der konischen Ausnehmungen (20) dem Winkel entspricht, unter dem die Schenkel des im wesentlichen gleichschenkligen Trapezquerschnitts der Hohlkammer (9) aufeinander zulaufen.

6. Kabelkanal nach Anspruch 4, **dadurch gekennzeichnet**, daß der Konuswinkel der konischen Ausnehmungen (20) größer ist als der Winkel, unter dem die Schenkel des im wesentlichen gleichschenkligen Trapezquerschnitts der Hohlkammer (9) aufeinander zulaufen.

7. Kabelkanal nach einem der vorhergehenden Ansprüche, **dadurch gekennzeichnet**, daß die Hohlkammer (9) mit im wesentlichen gleichschenklig-trapezförmigem Querschnitt in Breitenmitte des Kabelkanals verläuft.

8. Kabelkanal nach einem der vorhergehenden Ansprüche, **dadurch gekennzeichnet**, daß der Abstand von der Innenseite der Innenwand (2) zur Innenseite der Außenwand (3) des Hohlkammerprofilbodens (1) zwischen 2 mm und 6 mm, bevorzugt etwa 3 mm beträgt.

9. Kabelkanal nach einem der vorhergehenden Ansprüche, **dadurch gekennzeichnet**, daß die Innenwand (2), die Außenwand (3) und die Stege (4, 5) im wesentlichen mit gleicher Dicke ausgebildet sind.

10. Kabelkanal nach einem der vorhergehenden Ansprüche, **dadurch gekennzeichnet**, daß die Dicken der Wände (2, 3) und der Stege (4, 5) zwischen 0,3 mm und 1 mm, bevorzugt etwa 0,5 mm betragen.

11. Kabelkanal nach einem der vorhergehenden Ansprüche, **gekennzeichnet durch** eine aufeinanderfolgende Kabelkanalabschnitte (25) verbindende Bodenplatte (26;36), welche an wenigstens zwei Randseiten (30,32; 40,42) mit abstehenden, in den Hohlkammerprofilboden (1) des jeweiligen Kabelkanalabschnitts (25) eingesteckten Laschen (34;44) ausgebildet ist.

12. Kabelkanal nach Anspruch 11, **dadurch gekennzeichnet**, daß die Bodenplatte (26) als ebene Rechteckplatte (28) ausgebildet ist.

13. Kabelkanal nach Anspruch 12, **dadurch gekennzeichnet** daß die Laschen (34) als in Plattenebene von den Randseiten (30,32) abstehende rechteckige Zähne ausgebildet sind.

14. Kabelkanal nach Anspruch 11, **dadurch gekennzeichnet**, daß die Bodenplatte als Winkelbodenplatte (36) mit der Form einer um eine Biegekante (38) parallel zu zwei einander gegenüberliegenden Randseiten (40,42) gebogenen Rechteckplatte ausgebildet ist, und daß die Laschen (44) von diesen Randseien (40,42) abstehen.

15. Kabelkanal nach Anspruch 14, **dadurch gekennzeichnet**, daß die Laschen als rechteckige Zähne ausgebildet sind, welche jeweils in der Ebene der Winkelschenkel (45,45′) von den Randseiten (40,42) der Winkelbodenplatte (36) abstehen.

16. Kabelkanal nach einem der Ansprüche 11 bis 15, **dadurch gekennzeichnet**, daß die Länge der Randseiten (30,32;40,42) der Bodenplatte (26;36) im wesentlichen der Breite der Kabelkanalabschnitte entspricht.

## Claims

1. A cable duct with a hollow chamber profiled bottom (1) with an outer wall (3) and an inner wall (2) and with webs (4) between the walls (2, 3), characterised in that two webs (5) which are inclined in relation to the walls of the hollow chamber profiled bottom (1) and which extend beside each other in the longitudinal direction of the cable duct, form with the inner wall (2) and the outer wall (3) of the hollow chamber profiled bottom (1) a hollow chamber (9) with the cross-section of a substantially equilateral trapezium, of which the shorter base line is bounded by the outer wall (3).

2. A cable duct according to claim 1, characterised in that spaced apart from one another in the longitudinal direction of the cable duct and positioned substantially centrally between the inclined webs are bores which accommodate countersunk head screws in the walls (2, 3), whereby in each case a bore in the inner wall (2) is aligned with a bore in the outer wall (3), the diameter of the bore in the inner wall (2) exceeding the diameter of the bore in the outer wall (3).

3. A cable duct according to claim 2, characterised in that the diameter of the bore in the outer wall (3) corresponds to the length of the shorter base line of the substantially equilateral trapezoidal cross-section of the hollow chamber (9).

4. A cable duct according to claim 2 or 3, characterised in that the inclined webs (3) are provided with conical recesses (20) which merge into the bores in the inner wall (2) and the outer wall (3).

5. A cable duct according to claim 4, characterised in that the cone angle of the conical recesses (20) corresponds to the angle at which the arms of the substantially equilateral trapezoidal cross-section of the hollow chamber (9) converge on one another.

6. A cable duct according to claim 4, characterised in that the cone angle of the conical recesses (20) is greater than the angle sat which the arms of the substantially eguilateral trapezoidal cross-section of the hollow chamber (9) converge on one another.

7. A cable duct according to one of the preceding claims, characterised in that the hollow chamber (9) has a substantially equilateral trapezoidal cross-section which extends in the middle of the width of the cable duct.

8. A cable duct according to one of the preceding claims, characterised in that the distance from the inside face of the inner wall (2) to the inside face of the outer wall (3) of the hollow chamber profiled bottom (1) amounts to between 2 mm and 6 mm and preferably to about 3 mm.

9. A cable duct according to one of the preceding claims, characterised in that the inner wall (2), the outer wall (3) and the webs (4, 5) are constructed to have substantially the same thickness.

10. A cable duct according to one of the preceding claims, characterised in that the thicknesses of the walls (2, 3) and of the webs (4, 5) amount to between 0.3 mm and 1 mm and preferably to about 0.5 mm.

11. A cable duct according to one of the preceding claims, characterised by a bottom plate (26, 36) connecting successive cable duct portions (25) and which is constructed to have on at least two marginal sides (30, 32; 40, 42), projecting tabs (34, 44) which fit into the hollow chamber profiled bottom (1) of the respective cable duct portion (25).

12. A cable duct according to claim 11, characterised in that the bottom plate (26) is constructed as a plane rectangular plate (28).

13. A cable duct according to claim 12, characterised in that the tabs (34) are constructed as rectangular teeth which project from the marginal sides (30, 32) in the plane of the plate.

14. A cable duct according to claim 11, characterised in that the bottom plate is constructed as an angled bottom plate (36) with the form of a rectangular plate bent about a bending edge (38) parallel with two oppositely disposed marginal sides (40, 42) and in that the tabs (44) project from these marginal sides (40, 42).

15. A cable duct according to claim 14, characterised in that the tabs are constructed as rectangular teeth which project from the marginal sides (40, 42) of the angled bottom plate (36) in each case in the plane of the angled arms (45, 45′).

16. A cable duct according to one of claims 11 to 15, characterised in that the length of the marginal sides (30, 32; 40, 42) of the bottom plate (26, 36) corresponds substantially to the width of the cable duct portions.

## Revendications

1. Canalisation de câbles comportant un fond de profilé à chambre creuse (1) présentant une paroi extérieure (3) et une paroi intérieure (2) et des nervures (4) entre les parois (2, 3), caractérisée en ce que deux nervures (5) s'étendant de façon adjacente dans le sens de la longueur de la canalisation de câbles, inclinées par rapport aux parois du fond de profilé à chambre creuse (1), forment, avec la paroi intérieure (2) et la paroi extérieure (3) du fond de profilé à chambre creuse (1), une chambre creuse (9) de section transversale en trapèze à côtés sensiblement égaux, dont la base la plus courte est limitée par la paroi extérieure (3).

2. Canalisation de câbles selon la revendication 1, caractérisée en ce que sont prévus des perçages espacés les uns des autres dans le sens de la longueur de la canalisation, centrés sensiblement en un point médian entre les nervures (5) inclinées, destinés à loger des vis à tête conique dans les parois (2, 3), un perçage ménagé dans la paroi intérieure (2) étant respectivement aligné avec un perçage ménagé dans la paroi extérieure (3), et le diamètre du perçage ménagé dans la paroi intérieure (2) étant plus important que le diamètre du perçage ménagé dans la paroi extérieure (3).

3. Canalisation de câbles selon la revendication 2, caractérisée en ce que le diamètre du perçage ménagé dans la paroi extérieure (3) correspond à la longueur de la base la plus courte de la section trapézoïdale à branches sensiblement égales de la chambre creuse (9).

4. Canalisation de câbles selon la revendication 2 ou 3, caractérisée en ce que les nervures (5) inclinées sont pourvues de cavités (20) coniques qui se prolongent dans les perçages ménagés dans la paroi intérieure (2) et dans la paroi extérieure (3).

5. Canalisation de câbles selon la revendication 4, caractérisée en ce que l'angle de cône des cavités (20) coniques correspond à l'angle selon lequel les branches sensiblement égales de la section trapézoïdale de la chambre creuse (9) se rejoignent.

6. Canalisation de câbles selon la revendication 4, caractérisée en ce que l'angle de cône des cavités (20) coniques est supérieur à l'angle selon lequel les branches sensiblement égales de la section trapézoïdale de la chambre creuse (9) se rejoignent.

7. Canalisation de câbles selon l'une des revendications précédentes, caractérisée en ce que la chambre creuse (9), présentant une section transversale en forme de trapèze à branches sensiblement égales, s'étend au milieu de la largeur de la canalisation de câbles.

8. Canalisation de câbles selon l'une des revendications précédentes, caractérisée en ce que l'écart entre la face intérieure de la paroi intérieure (2) et la face intérieure de la paroi extérieure (3) du fond de profilé à chambre creuse se situe entre 2 mm et 6 mm, et représente de préférence environ 3 mm.

9. Canalisation de câbles selon l'une des revendications précédentes, caractérisée en ce que la paroi intérieure (2), la paroi extérieure (3) et les nervures (4, 5) présentent une épaisseur sensiblement égale.

10. Canalisation de câbles selon l'une des revendications précédentes, caractérisée en ce que l'épaisseur des parois (2, 3) et des nervures (4, 5) se situe entre 0,3 mm et 1 mm, et représente de préférence environ 0,5 mm.

11. Canalisation de câbles selon l'une des revendications précédentes, caractérisée par une plaque de fond (26 ; 36) reliant des sections (25) de canalisation de câbles successives, qui présente, au moins sur deux bords (30, 32 ; 40, 42), des languettes (34 ; 44) en saillie, enfoncées dans le fond de profilé à chambre creuse (1) de chaque section (25) de canalisation de câbles.

12. Canalisation de câbles selon la revendication 11, caractérisée en ce que la plaque de fond (26) est conformée en plaque rectangulaire (28) plane.

13. Canalisation de câbles selon la revendication 12, caractérisée en ce que les languettes (34) sont conformées en dents rectangulaires dépassant des bords (30, 32) dans le plan de la plaque.

14. Canalisation de câbles selon la revendication 11, caractérisé en ce que la plaque de base est conformée en plaque de fond angulaire (36) présentant la forme d'une plaque rectangulaire pliée, autour d'une arête de pliage (38), de façon parallèle à deux bords (40, 42) opposés, et en ce que les languettes (44) dépassent de ces bords (40, 42).

15. Canalisation de câbles selon la revendication 14, caractérisée en ce que les languettes sont conformées en dents rectangulaires, qui dépassent chacune, dans le plan des branches (45, 45′), des bords (40, 42) de la plaque de fond angulaire (36).

16. Canalisation de câbles selon l'une des revendications 11 à 15, caractérisée en ce que la longueur des bords (30, 32 ; 40, 42) de la plaque de base (26 ; 36) correspond sensiblement à la largeur des sections de canalisation de câbles.
